# EUROPÄISCHE PATENTSCHRIFT

(11) **EP 1 769 960 B1**
(45) Veröffentlichungstag und Bekanntmachung des Hinweises auf die Patenterteilung: **06.07.2011**
(21) Anmeldenummer: 06018071.8
(22) Anmeldetag: 30.08.2006
(51) Int. Cl.: B60J 7/20

(54) **Cabriolet-Fahrzeug mit einem in geöffneter Stellung als Zugangshilfe anhebbaren Dach**
Convertible vehicle with a roof which may be lifted when in the open position in order to improve accessibility
Véhicule du type cabriolet avec un toit qui peut être soulevé dans sa position ouverte pour améliorer l'accessibilité

(30) Priorität: 30.09.2005 DE 102005047315
(43) Veröffentlichungstag der Anmeldung: 04.04.2007
(73) Patentinhaber: Wilhelm Karmann GmbH, 49084 Osnabrück (DE)
(72) Erfinder: Brockhoff, Franz Ulrich, 49565 Bramsche (DE)
(74) Vertreter: Kronthaler, Schmidt & Coll.

(56) Entgegenhaltungen:
- WO-A-02/062605
- WO-A-03/086801
- WO-A-2004/009386
- DE-C1- 19 706 444
- FR-A1- 2 796 901

## Beschreibung

Die Erfindung betrifft ein Cabriolet-Fahrzeug mit einem Dach, das in geöffneter Stellung als Zugangshilfe zu darunter liegenden Bereichen ein Stück weit anhebbar ist, nach dem Oberbegriff des Anspruchs 1 sowie ein zugehöriges Fahrzeugdach.

Es ist bekannt, Cabriolet-Fahrzeuge vorzusehen, bei denen in geöffneter Dachstellung ein das Dach übergreifender Deckelteil geöffnet werden kann, um damit eine heckseitige Beladeöffnung für Gepäck freizugeben. Da das geöffnete Dach häufig mit einer erheblichen Längserstreckung im oberen Bereich des Gepäckraums liegt, kann es erschwert sein, zu den dann unter dem Dach liegenden und dann von diesem verdeckten Bereichen Zugang zu bekommen. Häufig liegen hier jedoch noch recht tiefe Mulden, die größere Gepäckstücke aufnehmen können. Das Ein- und Ausladen kann jedoch durch gerade im hinteren Bereich nur geringe Höhe zwischen dem abgelegten Dach und dem darunter befindlichen Kofferraumboden miniert sein, so daß solch große Gepäckstücke dann nur bei geschlossenem Dach ein- und ausgeladen werden können. Um hier eine Verbesserung zu schaffen, ist es bekannt, das Dach bei geöffnetem Deckelteil ein Stück weit im Schließsinn anheben zu können und dadurch eine größere Zugangsöffnung zu den unter dem Dach liegenden Bereichen zu ermöglichen. Die Aufwärtsbewegung des Daches ist allerdings dadurch eng begrenzt, daß dessen Kollision mit dem geöffneten Deckelteil vermieden werden muß, so daß nur wenig Bewegungsraum zur Verfügung steht

Aus der WO 02/062605 A1 ist ein faltbares, mehrteiliges Dach bekannt, das über seitliche Lenker aus seiner geöffneten Stellung heraus zur Vergrößerung der Höhe einer unter dem geöffneten Dach verbleibenden Beladeöffnung angehoben werden kann. Die Lenker ragen in den Kofferraum hinein und greifen beidseits an seitlich außen gelegenen sockelartigen Flanschen des hintersten Dachteils an. Neben diesen Lenkern sind nach dieser Schrift die Breite weiter einschränkende und aufragende Kulissen in karosseriefesten und im wesentlichen vertikal aufragenden Sockeln vorgesehen. Zudem stehen auf der den Lenkern gegenüber liegenden Seiten der Sockel noch aufrechte und einen wesentlichen Teil der Kofferraumhöhe einnehmende Antriebsorgane, über die das Paket aus geöffneten Dachteilen zur Vergrößerung der Ladeöffnung insgesamt beweglich ist. Damit ergibt sich beidseits für die Breite der Ladeöffnung eine erhebliche Einschränkung, durch die der Gewinn an Höhe dieser Öffnung erkauft wird.

Der Erfindung liegt das Problem zugrunde, hier eine Verbesserung zu erreichen.

Die Erfindung löst dieses Problem durch ein Cabriolet-Fahrzeug mit den Merkmalen des Anspruchs 1 sowie durch ein bewegliches Fahrzeugdach mit den Merkmalen des Anspruchs 10. Weitere vorteilhafte Ausgestaltungen der Erfindung sind den Ansprüche 2 bis 9 zu entnehmen.

Erfindungsgemäß ist mit der von der Schließbewegung des Daches abweichenden Anhebebewegung als Zugangshilfe eine Optimierung dieser Anhebebewegung im Hinblick auf die jeweilige Fahrzeuggeometrie möglich, wobei durch die Halterung eines Antriebs für diese Anhebebewegung an einem bezüglich der Fahrzeugquerrichtung zentralen Modul eine Einschränkung der Kofferraumbreite und/oder der Breite der Beladeöffnung gänzlich vermeidbar ist.

Insbesondere können mehrere Dachteile bei dieser Anhebebewegung gegeneinander wie bei geöffnetem Dach eingefaltet verbleiben und nicht - wie bei einer beginnenden Bewegung im Schließsinn - sich bereits gegeneinander entfalten. Bei der Anhebebewegung kann daher das Paket aus Dachteilen ebenso flach bleiben wie im abgelegten Zustand. Auch in Längsrichtung können die Dachteile gegeneinander unbewegt bleiben, so daß sie insgesamt genau die gleiche Relativlage zueinander wie in vollständig geöffneter Dachstellung bei geschlossenem Deckelteil haben können und somit irgendeine Steuerung für eine Relativbewegung der Dachteile entbehrlich ist.

Konstruktiv einfach kann für die Anhebebewegung des Daches als Zugangshilfe ein Antrieb vorgesehen sein, der bei der sonstigen Dachöffnungs- oder -schließbewegung vollständig unbewegt ist.

Über den Antrieb kann insbesondere ein zur Schwenkachse des Daches führender Lenker beweglich sein, der weit in Richtung der Fahrzeugmitte gerückt ist. Insbesondere kann ein zentrales Hauptlager auch für diese Lenker und ihre Lager und auch einen Antrieb für das Dachöffnen und - schließen als gemeinsames Modul vorgesehen sein. Dadurch bleiben die außen liegenden Bereiche der Karosserie, in die die seitlichen Gestängeteile des Daches eintauchen, von Lagerteilen unbeeinflußt, es ergeben sich Platzvorteile. Zudem ist keine Synchronisation in Fahrzeugquerrichtung erforderlich. Für die Dachöffnungs- und Schließbewegung reicht ein einziger Antrieb.

Zusätzlich kann vorteilhaft die Schwenkachse für eine hintere Dacheinheit während des Dachöffnens oder -schließens so aufwärts beweglich sein, daß die hintere Dacheinheit über hoch in die Karosserie ragende Radhäuser und/oder Federdome geführt wird.

Eine besonders flache und schmale Dachablage kann sichergestellt sein, wenn in der hinteren Dacheinheit seitlich der Heckscheibe liegende C-Säulen während der Dachöffnung gegenüber der Heckscheibe einschwenkbar sind. Da insbesondere ein vorgeordnetes Dachteil ohnehin in abgelegter Stellung gegenläufig zum hinteren Dachteil orientiert und gewölbt ist, steht für die eingeschwenkten C-Säulen genug Raum zur Verfügung, ohne daß die Dicke des abgelegten Dachpakets zunehmen müßte: Insbesondere können die C-Säulen in den Hohlraum zwischen gegenläufig gewölbten Dachteilen einschwenkbar sein. Das Dachpaket ist deutlich schmaler gegenüber festen C-Säulen, so daß der Ablageraum des Daches verschmälert und die Randfuge eines Verdeckkastendeckels erheblich zur Fahrzeugmitte hin rücken kann, was die Designmöglichkeiten am Fahrzeug verbessert.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: eine perspektivische, vorne und unten abge- brochene Ansicht von schräg hinten eines erfin- dungsgemäßen Cabriolet-Fahrzeugs bei geschlosse- nem Dach,
- Fig. 2: eine ähnliche Ansicht wie Fig. 1 des Fahrzeugs bei geöffnetem Dach und geschlossenem Deckel- teil,
- Fig. 3: eine ähnliche Ansicht wie Fig. 2 bei geöffnetem Deckelteil und als Zugangshilfe angehobenem Dach,
- Fig. 4: eine schematische, nach vorne und unten abge- brochene Seitenansicht des Fahrzeugheckbereichs mit vergleichend eingezeichneter separater Anhe- bebewegung des Daches und alternativ im Schließ- sinn wirkender Anhebebewegung des Daches,
- Fig. 5: eine schematische, nach vorne und unten abge- brochene Seitenansicht eines erfindungsgemäßen Cabriolet-Fahrzeugs bei geschlossenem Dach, wo- bei der Übersicht halber ein starr an der Hal- terung angeordneter und diese mit der Fahrzeug- karosserie verbindender Schwenkhebel nicht ein- gezeichnet ist,
- Fig. 6: eine ähnliche Ansicht wie Fig. 5 während der Dachöffnung,
- Fig. 7: eine ähnliche Ansicht wie Fig. 6 bei geöffnetem Dach und darüber geschlossenem Deckelteil,
- Fig. 8: eine ähnliche Ansicht wie Fig. 7 bei geöffnetem Dach und zur Freigabe einer Beladeöffnung geöff- netem Deckelteil,

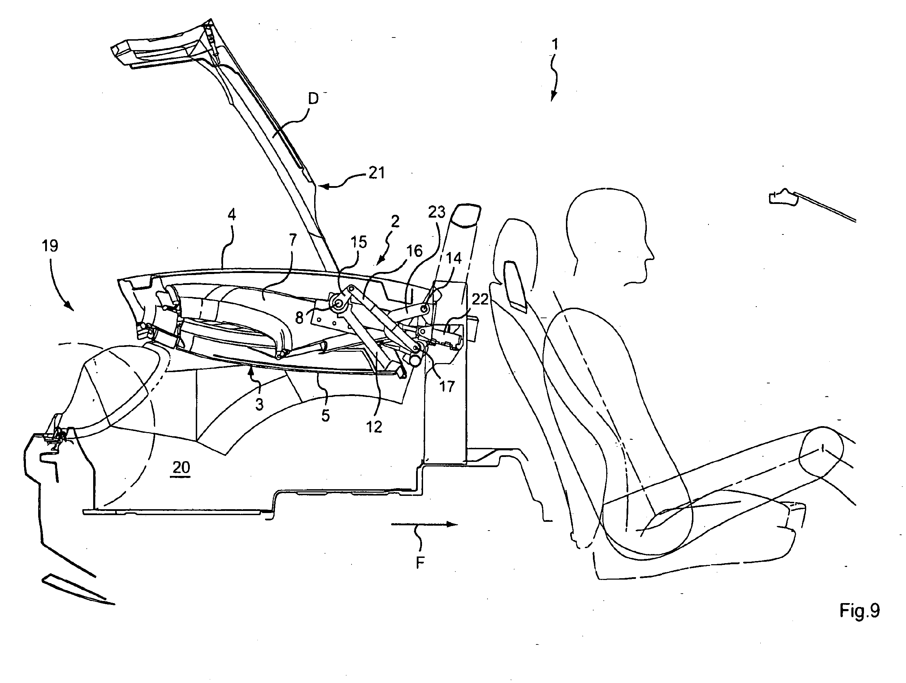

- Fig. 9: eine ähnliche Ansicht wie Fig. 8 bei beginnender Anhebebeweung des Daches als Zugangshilfe,

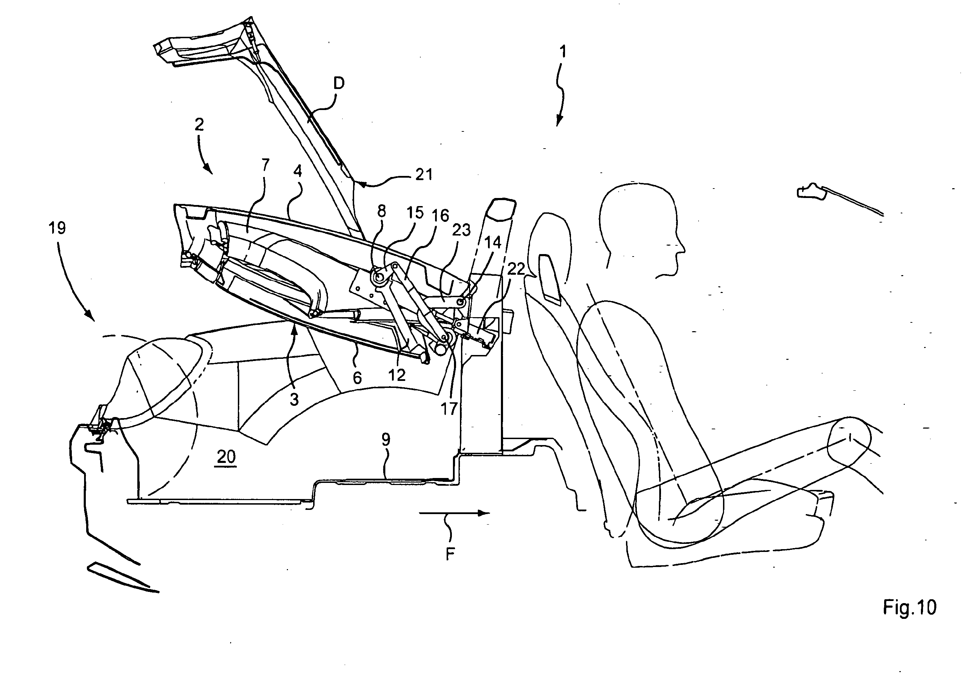

- Fig. 10: eine ähnliche Ansicht wie Fig. 9 bei weiter fortschreitendem Anheben des Daches als Zu- gangshilfe,

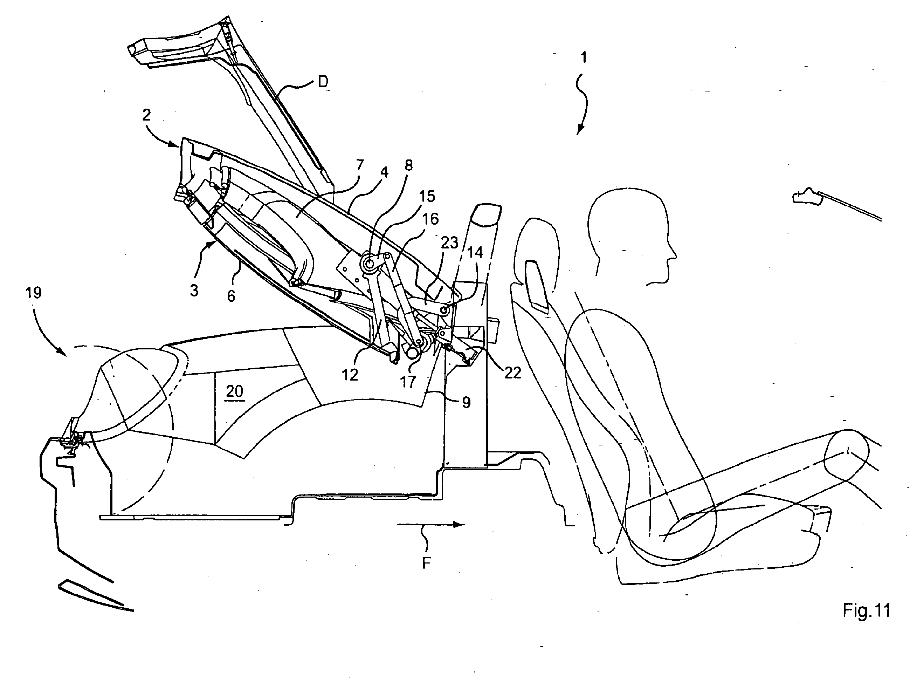

- Fig. 11: eine ähnliche Ansicht wie Fig. 10 mit voll- ständig als Zugangshilfe angehobenem Dach,
- Fig. 12: eine vergrößerte Detailansicht des geöffneten Daches in seiner Stellung nach Fig. 8,
- Fig. 13: eine vergrößerte Detailansicht des geöffneten Daches in seiner beginnenden Anhebebewegung nach Fig. 9,
- Fig. 14: eine vergrößerte Detailansicht des geöffneten Daches in seiner weiter fortschreitenden Anhebe- bewegung nach Fig. 10,
- Fig. 15: eine vergrößerte Detailansicht des geöffneten Daches in seiner vollständig als zugangshilfe angehobenen Stellung nach Fig. 11.

Ein erfindungsgemäße Cabriolet-Fahrzeug 1 umfaßt im hier dargestellten Ausführungsbeispiel zwei bei geschlossenem Dach 2 bezüglich der Fahrtrichtung F aufeinander folgende und voneinander getrennte Dachabschnitte 3, 4. Weitere Dachabschnitte zur Überbrückung eines längeren Fahrzeuginnenraums, insbesondere mit zwei oder mehr Sitzreihen, sind möglich und können nach vorne hin anschließen. Hier ist nur beispielhaft ein Zweisitzer dargestellt.

Gemäß der Zeichnung umfaßt hier die hintere Dacheinheit 3 im bezüglich der Fahrzeugquerrichtung mittleren Bereich 5 eine Heckscheibe 6 und seitlich außen gegenüber dieser separate C-Säulen 7. Das dieser vorgeordnete Dachteil 4 weist hier eine durchgehende Außenfläche auf, könnte beispielsweise auch noch ein Hub- oder Schiebedach enthalten.

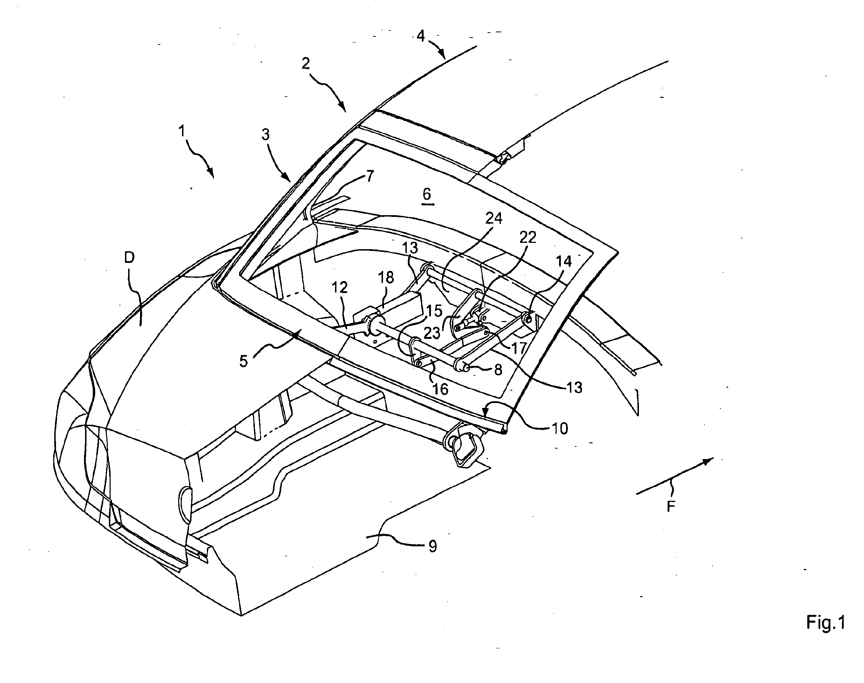

Die hintere Dacheinheit 3 ragt in geschlossener Stellung schräg aufwärts. Das Dachteil 4 ist dem hinteren Dachteil 3 in geschlossener Stellung (Fig. 1) vorgeordnet und liegt im wesentlichen horizontal oberhalb des Insassenraums. Beide Dachabschnitte 3, 4 sind im gezeichneten Ausführungsbeispiel im wesentlichen aus starren Teilen gebildet. Auch ein Softtop ist vorstellbar.

Zur Dachöffnung ist in der hier gezeigten Ausführung die hintere Dacheinheit 3 heckwärts und abwärts um eine mit 8 bezeichnete Schwenkachse verlagerbar und das vorgeordnete Dachteil 4 an die hintere Dacheinheit 3 beispielsweise heranschwenkbar. Auch eine Parallelverlagerung oder ähnliches wäre möglich.

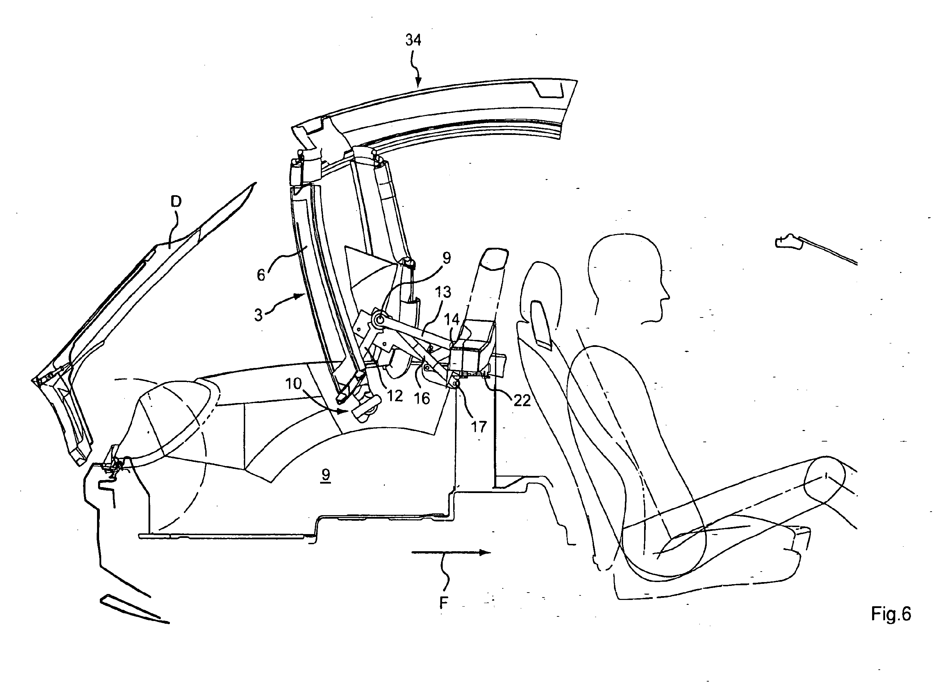

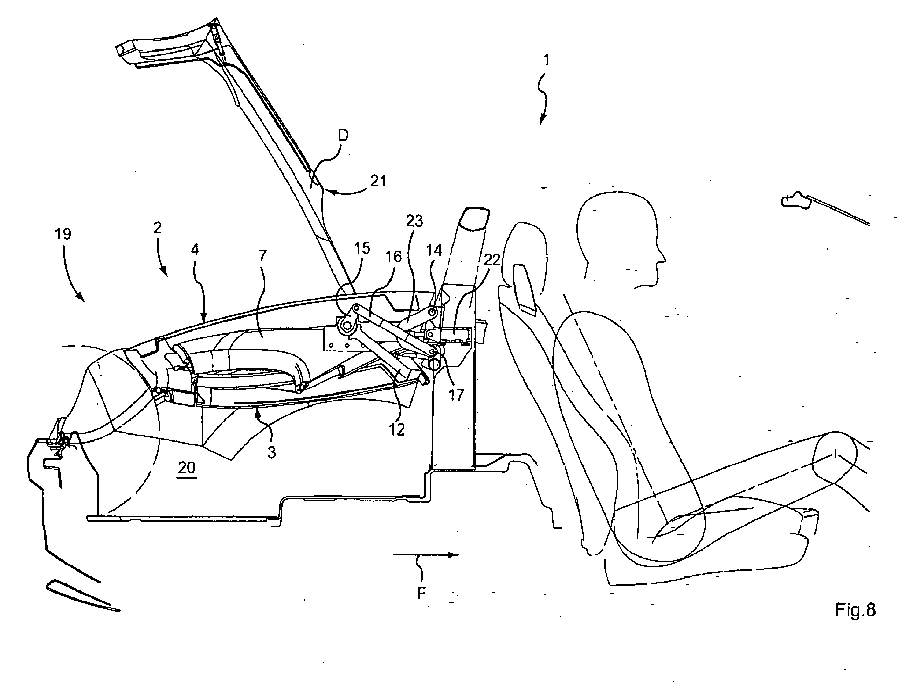

In geöffneter Stellung des Daches 2 ist dieses zumindest teilweise oberseitig von einem Deckelteil D übergriffen, das hier in zwei Sinnen geöffnet werden kann, nämlich einerseits zur Freigabe einer Durchtrittsöffnung für das Dach 2 (sh. z. B. Fig. 6) und andererseits zur Freigabe einer Beladeöffnung für Gepäck (sh. z. B. Fig. 8ff.) Bei einer entsprechenden Kinematik ist auch eine Bewegung des Deckelteils D in nur einem Öffnungssinn für beide Freigaben möglich.

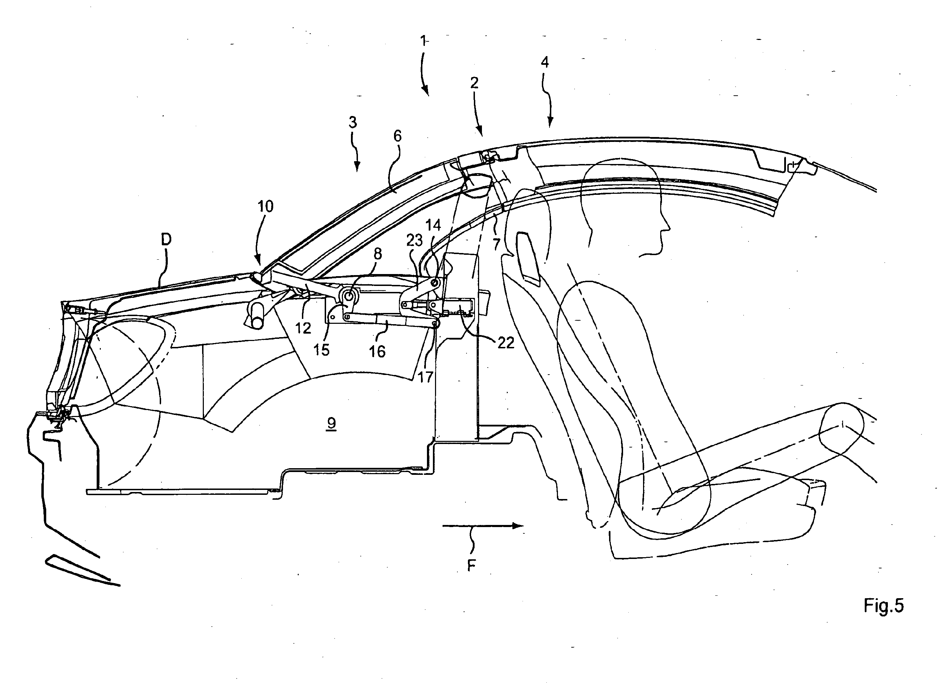

Wie zum Beispiel im Ablauf der Dachöffnung nach den Figuren 5 bis 7 erkennbar ist, ist die Schwenkachse 8 während des Dachöffnens und -schließens gegenüber der Karosserie 9 lageveränderlich, und zwar derart, daß die in geschlossener Dachstellung hintere, untere Kante 10 der hinteren Dacheinheit 3 nicht wie bei einer reinen Schwenkbewegung um eine starre Achse 8 auf einer Kreisbahn, sondern auf einer gegenüber dieser angehobenen Bahn geführt wird. Die Schwenkachse 8 ist hierfür während der Dachöffnungs- oder schließbewegung gegenüber der geschlossenen Dachstellung bezüglich der Fahrzeugkarosserie 9 aufwärts verlagert. Durch die Aufwärtsverlagerung der Kante 10 während der Dachbewegung ist eine Kollision des Daches 2 mit zum Beispiel einem Radhaus oder Federbeindom 11 vermieden.

Der mittlere Bereich 5 der hinteren Dacheinheit 3 mit der Heckscheibe 6 ist mittelbar oder unmittelbar in seinem unteren Bereich über einen bezüglich der Heckscheibe 6 starren Hebel 12 mit der Schwenkachse 8 verbunden. Eine Drehbewegung um die Achse 8 führt dadurch direkt zu einer Schwenkbewegung der hinteren Dacheinheit 3. Die Halterung 8 ist einerseits über einen fest mit dieser verbundenen Schwenkhebel 13 - in einigen Figuren nicht eingezeichnet - an der Karosserie 9 abgestützt, wobei der Schwenkhebel 13 um eine horizontal und quer in der Karosserie 9 liegende Achse 14 schwenkbeweglich ist. Andererseits ist ein Kurbeltrieb mit einem kurzen Hebel 15 und einem langen Hebel 16 vorgesehen, wobei der lange Hebel 16 ebenfalls um eine horizontal und quer in der Karosserie 9 liegende Achse 17 schwenkbar ist. Auch diese Achse 17 wirkt während der Dachöffnungs- oder Schließbewegung wie eine karosseriefeste Achse und verändert ihre Lage nur in der zweiten, unten noch näher erläuterten Anhebebewegung des geöffneten Daches als Zugangshilfe.

Um das Dach 2 zu öffnen oder zu schließen, sind nach Öffnung eines hinteren Deckelteils D die Drehbewegung des starren Hebels 12 um die Schwenkachse 8 und deren Verlagerung mit Hilfe des Kurbeltriebs 15;16 gleichzeitig über einen aufgrund des zentralen Hauptlagers nur einzigen erforderlichen und im Bereich der Schwenkachse 8 gelegenen und mitbewegten Antrieb 18 bewirkbar.

Neben der nur beispielhaft beschriebenen Öffnungs- und Schließbewegung des Daches 2 ist in jedem Fall erfindungsgemäß eine zweite, gegenüber der Schließbewegung abweichende Dachbewegung aus seiner geöffneten Stellung heraus möglich. Diese Bewegung kann nur bei zur Freigabe zumindest einer Beladeöffnung 19 geöffnetem Deckelteil D stattfinden (Fig. 8 ff.) und ist ansonsten blockiert.

Mit dieser zweiten Bewegung ist das Dach 2 ein Stück weit als Zugangshilfe zu darunter liegenden Bereichen 20 anhebbar.

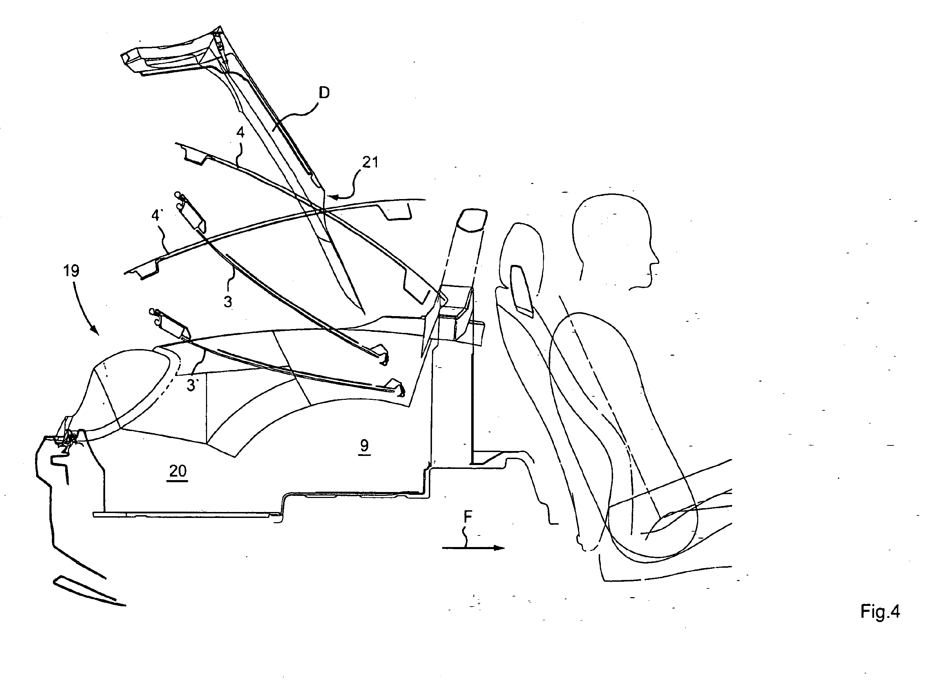

Diese Anhebebewegung des Daches 2 als Zugangshilfe hat einen von einer beginnenden Schließbewegung des Daches 2 abweichenden Verlauf, da bei der beginnenden Schließbewegung die Achsen 14 und 17 in ihrer Lage unverändert blieben und gleichzeitig mit dem Anheben des Daches 2 ein Auffalten seiner Teile 3', 4' gegeneinander begönne, wie in der vergleichenden Darstellung gemäß Figur 4 deutlich wird.

Daraus wird deutlich, daß bei beginnender Schließbewegung und Auseinanderfalten der Dachteile 3', 4' nur ein erheblich geringeres Anheben bis zu deren Kollision mit der Vorderkante 21 des Deckelteils D möglich wäre. Die Zugangsöffnung 19 zu den unter dem Dach 2 gelegenen Bereichen 20 wäre erheblich kleiner als bei der erfindungsgemäßen Lösung, die in Fig. 4 mit den Dachteilen 3 und 4 ebenfalls angedeutet ist.

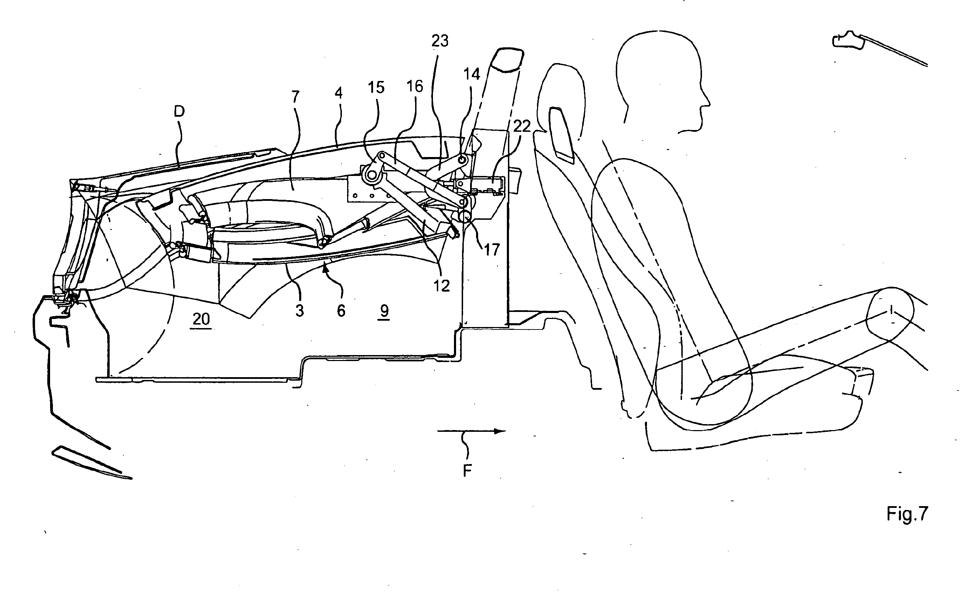

Dabei ist erkennbar, daß in der Zeichnung die in geöffneter Stellung des Daches 2 gegeneinander eingefalteten Dachabschnitte 3, 4 in dieser Anhebebewegung des Daches 2 als Zugangshilfe gegeneinander unverändert eingefaltet verbleiben und in dieser Stellung des Daches 2 als Zugangshilfe dieselbe Relativlage zueinander haben wie in vollständig geöffneter Dachstellung bei geschlossenem Deckelteil D (sh. z. B. Fig. 7).

Diese gesonderte Anhebebewegung des Daches 2 als Zugangshilfe ist von einem Antrieb 22 bewirkbar, der bei der Öffnungs- oder Schließbewegung des Daches unbewegt ist. Der Antrieb 22, hier ein liegender Zylinder, wirkt auf einen Boomeranglenker 23 ein, an dem seinerseits die Achsen 14 und 17 liegen, die ihrerseits über die Hebel 13, 15 und 16 die Schwenkachse 8 für die Dachbewegung halten. Dadurch, daß der Lenker 23 beim eigentlichen Dachöffnen und - schließen unbewegt ist, wirken diese Achsen dabei wie karosseriefeste Achsen.

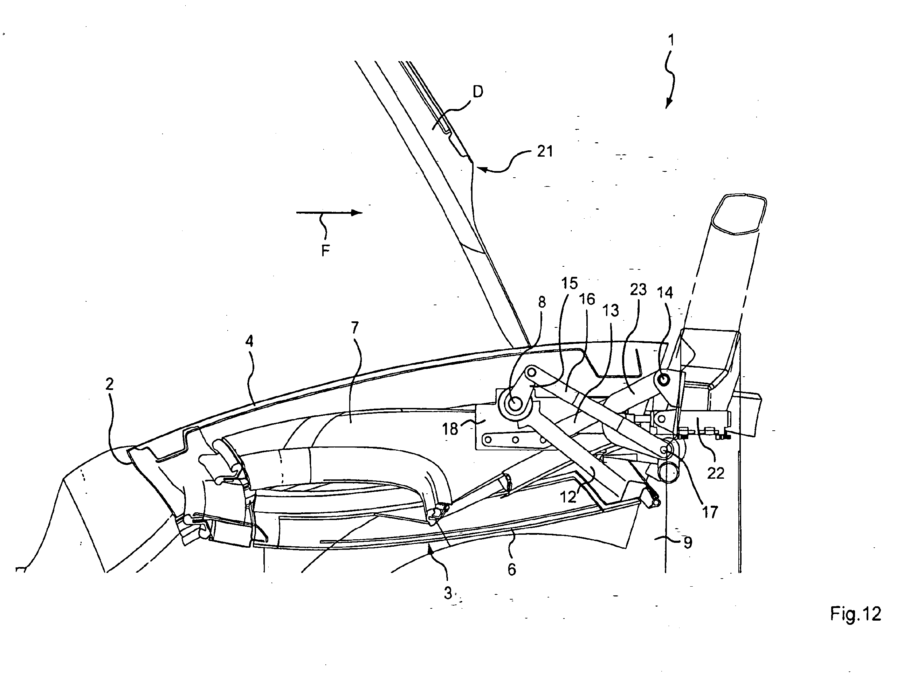

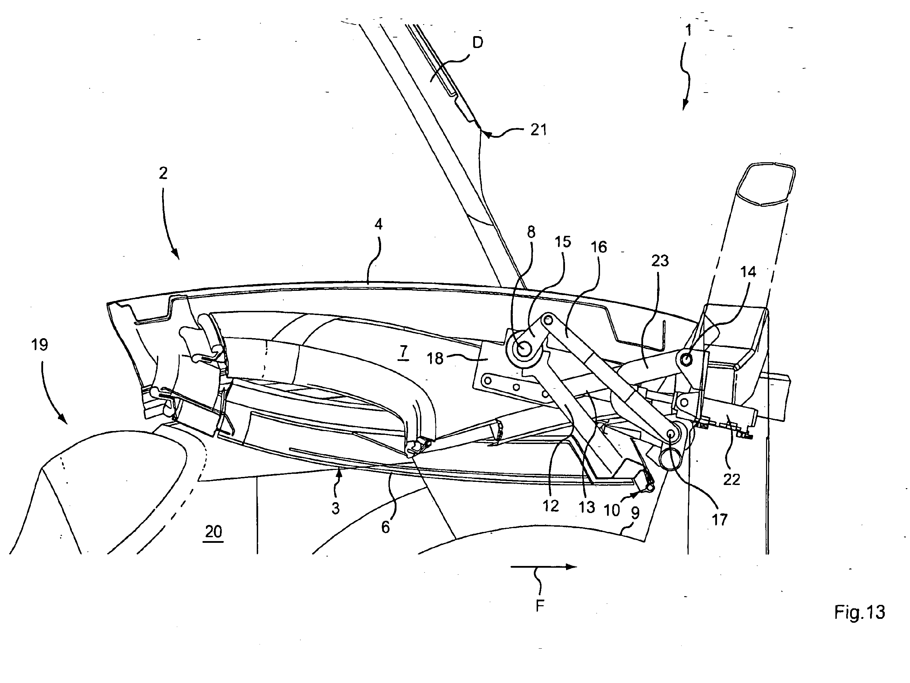

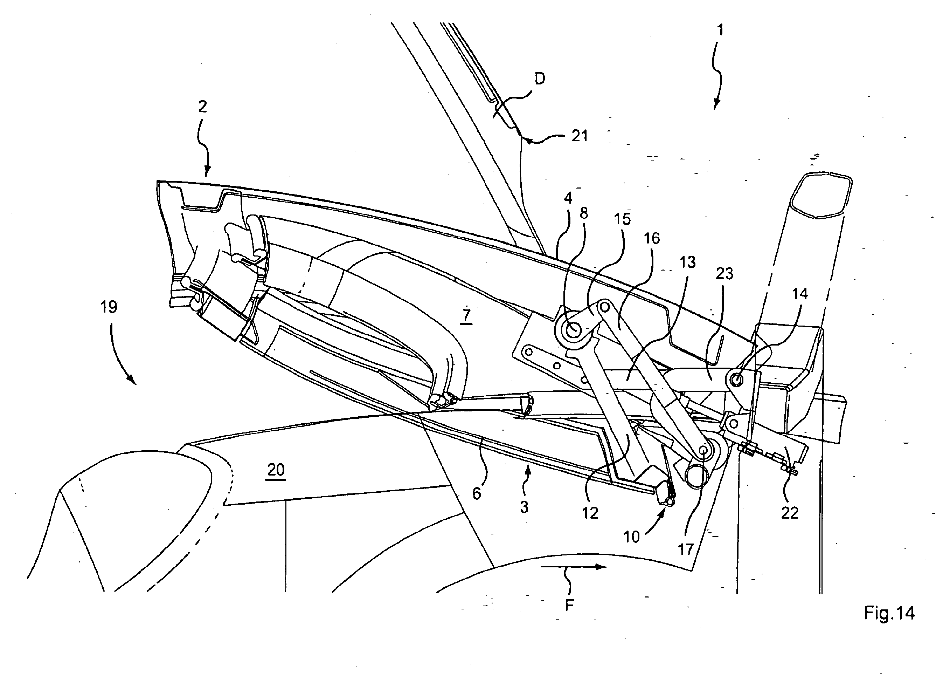

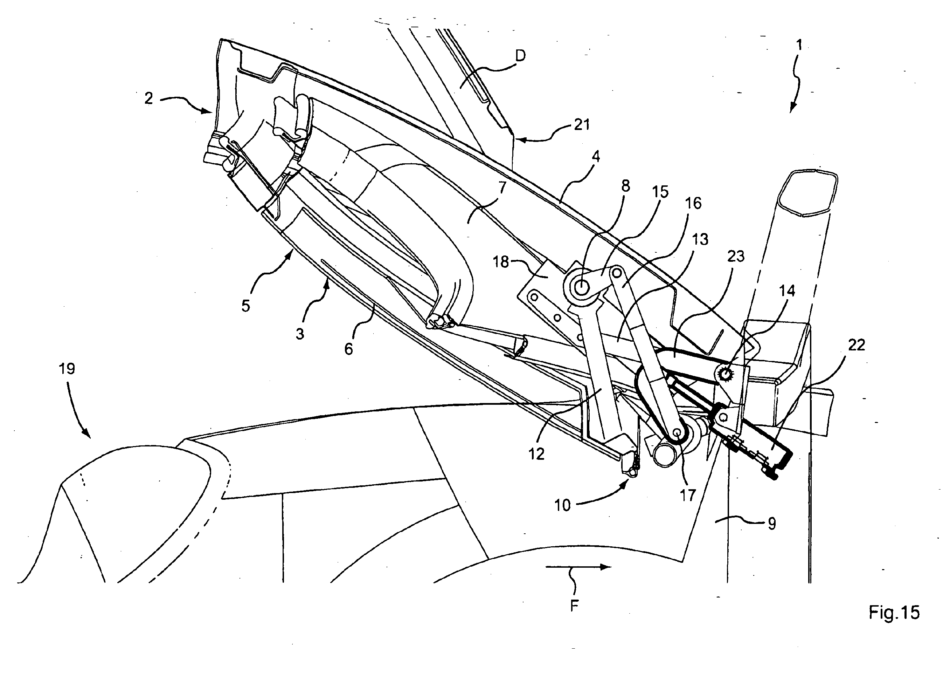

Bei geöffnetem Dach 2 und geöffnetem Heckdeckelteil D ist über Ausschieben des Hubzylinders 22 die Achse 17 - und damit die zwischen den Dachteilen 3, 4 liegende Schwenkachse 8 - nach hinten und oben verlagerbar (Fig. 12 - Fig. 15), so daß das Dach 2 in einer von seiner Schließbewegung abweichenden Bewegung, nämlich ohne daß sich der Winkel zwischen den Dachabschnitten 3 und 4 vergrößert und ohne daß der Antrieb 18 wirksam ist, anhebbar ist. Damit ist die angesprochene Vergrößerung einer Gepäckeinladeöffnung 19 unter das geöffnete Dach 2 ermöglicht, wobei dadurch, daß die Dachteile 3, 4 flach zusammengelegt bleiben, diese Öffnung deutlich größer als bei sonst bekannter Einleitung der Schließbewegung mit Vergrößerung des Winkels der Dachabschnitte 3, 4 untereinander ausfällt.

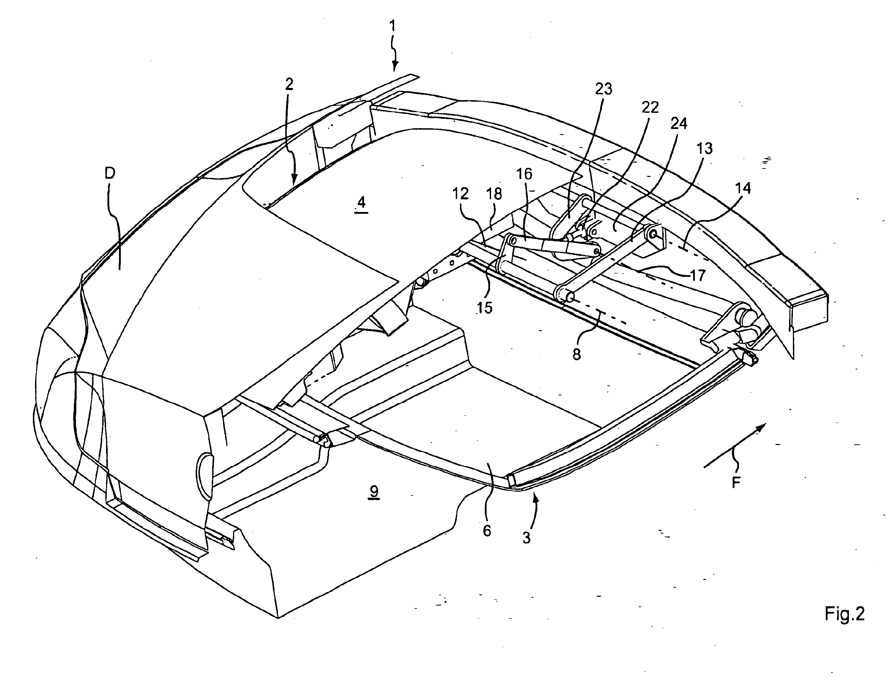

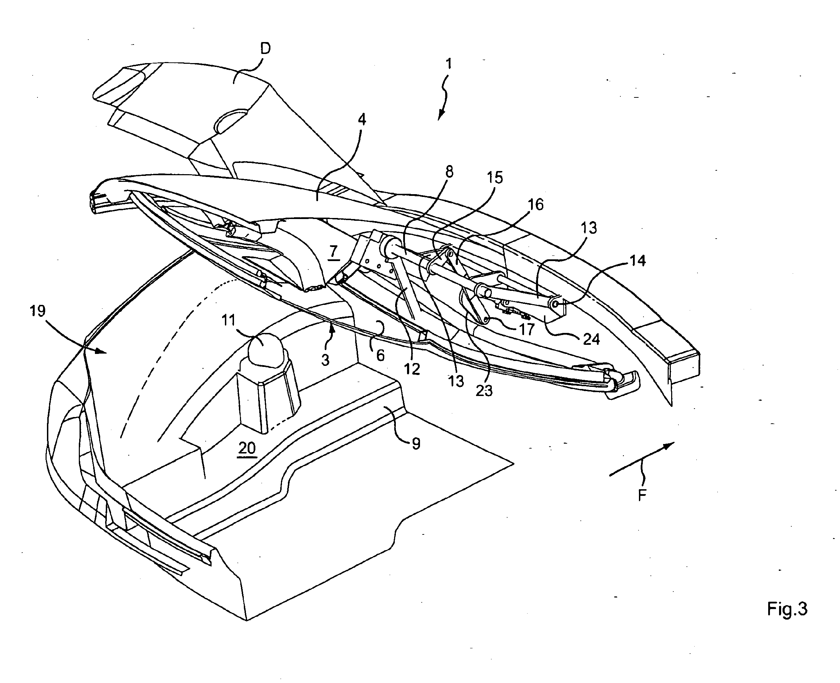

Wie in den perspektivischen Ansichten nach den Figuren 1 bis 3 erkennbar ist, liegt sowohl der Antrieb 22 als auch die Hauptlager 14, 17 für die Bewegung der Schwenkachse 8 ungefähr im mittleren Drittel der Fahrzeugbreite, ist also gegenüber herkömmlichen Lösungen erheblich in Richtung einer vertikalen Fahrzeuglängsmittelebene verlagert, um so an jeder Seite zumindest 10% bis 20% der Breite freizulassen für seitliche Gestängeteile des Daches 2. Zudem ist hier besonders vorteilhaft die Lagerung der Achsen 14, 17 und 8 insgesamt als ein zusammenhängendes, zentrales Hauptlager ausgebildet, das an einer gemeinsamen Grundplatte 24 gehalten ist, die auch ein Widerlager für den zusätzlichen Antrieb 22 trägt. Es ist daher keinerlei Synchronisation in Fahrzeugquerrichtung erforderlich. Das gesamte zentrale Hauptlager ist modular in den Rohbau einsetzbar.

Mit dem zentralen Hauptlager wird es auch möglich, daß die hintere Dacheinheit 3 über ihre Höhenerstreckung geteilt ist und außer dem mittleren Bereich 5 mit der Heckscheibe 6 zumindest im wesentlichen seitlich neben diesem gelegene und gegenüber der Heckscheibe 6 bewegliche C-Säulen 7 umfaßt. Die C-Säulen 7 sind hier bei der Dachöffnung gegenüber dem mittleren Abschnitt mit der Heckscheibe 6 des Dachteils 3 um Drehachsen einschwenkbar, die zumindest teilweise gleichzeitig erste Antriebswellen für das Einschwenken des vorgeordneten Dachteils 4 gegenüber dem hinteren Dachteil 3 bilden und die bei geschlossenem Dach 2 jeweils zumindest eine Komponente in Fahrtrichtung F und eine aufwärts gerichtete Komponente aufweisen. In den hier gezeichneten Figuren liegen die Drehachsen parallel zur Erstreckungsebene des hinteren Dachteils 3 und parallel zu den seitlichen Rändern der Heckscheibe 6, was nicht zwingend ist.

Die Verschwenkungsbewegung der hinteren Dacheinheit 3 um die horizontale und quer zum Fahrzeug 1 liegende Schwenkachse 8 wird über untere Kreuzgelenke in eine Drehbewegung der Drehachsen übersetzt, so daß mit der Dachöffnung gleichzeitig die C-Säulen 7 einschwenken. Am oberen Ende der hinteren Dacheinheit 3 findet zwangsweise und ohne weitere Steuerungsteile eine weitere Übersetzung in eine Heranschwenkbewegung des vorgeordneten Dachteils 4 an die hintere Dacheinheit 3 statt, zum Beispiel über weitere Kreuzgelenke.

Damit genügt insgesamt zur Bewegung des hinteren Dachteils 3 um die quer zum Fahrzeug 1 liegende Schwenkachse 8, des vorgeordneten Dachteils 4 um die zweite Horizontalschwenkachse und zur Drehbewegung der C-Säulen 7 um deren Drehachsen ein einziger Antrieb 18, dessen Wirkung aufgrund des zentralen Hauptlagers auch keine Synchronisation benötigt.

Das gesamte bewegliche Dach 2 kann vor Einbau in den Rohbau auf Funktion getestet werden; die so fertig eingestellte modulare Einheit kann dann an den Rohbau angeliefert und über die Grundplatte 24 des zentralen Hauptlagers mit diesem verbunden werden.

Die Erfindung ist sowohl bei Fahrzeugen mit manuell zu bewegenden Dächern auch insbesondere bei voll- oder teilautomatischer Beweglichkeit des Daches 2 anwendbar.

## Patentansprüche

1. Cabriolet-Fahrzeug (1) mit einem in Öffnungsstellung im hinteren Fahrzeugbereich und zumindest teilweise unterhalb eines Deckelteils (D) ablegbaren Dach (2), wobei das Deckelteil (D) zur Freigabe einer Beladeöffnung (19) für Gepäck öffnungsfähig und bei in diesem Sinn teilweise oder vollständig geöffnetem Deckelteil (D) das Dach (2) ein Stück weit als Zugangshilfe zu darunter liegenden Bereichen (20) anhebbar ist,
**dadurch gekennzeichnet,**
**dass** diese Anhebebewegung des Daches (2) als Zugangshilfe einen von einer beginnenden Schließbewegung des Daches (2) abweichenden Verlauf hat und für die Anhebebewegung ein Antrieb (22) vorgesehen ist, wobei der Antrieb (22) an einem bezüglich der Fahrzeugquerrichtung zentralen Hauptlager (24) gelegen sind.

2. Cabriolet-Fahrzeug (1) nach Anspruch 1,
**dadurch gekennzeichnet,**
**dass** mehrere in geöffneter Stellung des Daches gegeneinander eingefaltete Dachabschnitte (3;4) in der Anhebebewegung des Daches (2) als Zugangshilfe gegeneinander eingefaltet verbleiben.

3. Cabriolet-Fahrzeug (1) nach Anspruch 2,
**dadurch gekennzeichnet,**
**dass** die Dachabschnitte (3;4) in angehobener Stellung des Daches (2) als Zugangshilfe dieselbe Relativlage zueinander haben wie in vollständig geöffneter Dachstellung bei geschlossenem Deckelteil (D).

4. Cabriolet-Fahrzeug (1) nach einem der Ansprüche 1 bis 3,
**dadurch gekennzeichnet,**
**dass** der Antrieb (22) für die Anhebebewegung des Daches als Zugangshilfe bei der Öffnungs- oder Schließbewegung des Daches (2) unbewegt ist.

5. Cabriolet-Fahrzeug (1) nach Anspruch 4,
**dadurch gekennzeichnet,**
**dass** über Bewegung des Antriebs (22) ein Lenker (23) beweglich ist, an dem eine horizontale Schwenkachse (8) des Daches (2) mittelbar (Lenker 15;16) beweglich gehalten ist.

6. Cabriolet-Fahrzeug (1) mit einem in Öffnungsstellung im hinteren Fahrzeugbereich und zumindest teilweise unterhalb eines Deckelteils (D) ablegbaren Dach (2) nach einem der Ansprüche 1 bis 5,
**dadurch gekennzeichnet,**
**dass** der Antrieb (22) für die Anhebebewegung und die Lager (14;17) für die Öffnungs- und Schließbewegung des Daches (2) sowie der hierzu erforderliche Antrieb (18) an einem bezüglich der Fahrzeugquerrichtung zentralen Hauptlager (24) gelegen sind.

7. Cabriolet-Fahrzeug (1) nach einem der Ansprüche 1 bis 6,
**dadurch gekennzeichnet,**
**dass** das Dach (2) eine hintere Dacheinheit (3) umfasst, die zu ihrer Öffnung um eine Schwenkachse (8) heckwärts und abwärts verlagerbar ist, wobei die Schwenkachse (8) während der Dachöffnungsbewegung gegenüber der geschlossenen Dachstellung bezüglich der Fahrzeugkarosserie (9) aufwärts verlagert ist.

8. Cabriolet-Fahrzeug (1) nach Anspruch 7,
**dadurch gekennzeichnet,**
**dass** die Verlagerung der Schwenkachse (8) mit Hilfe eines Kurbeltriebs (15;16) bewirkbar ist.

9. Cabriolet-Fahrzeug (1) nach einem der Ansprüche 1 bis 8,
**dadurch gekennzeichnet,**
**dass** in der hinteren Dacheinheit (3) seitlich der Heckscheibe (6) liegende C-Säulen (7) während der Dachöffnung gegenüber der Heckscheibe (6) einschwenkbar sind.

10. Bewegliches Fahrzeugdach (2) für ein Cabriolet-Fahrzeug (1) nach einem der Ansprüche 1 bis 9.

## Claims

1. A convertible vehicle (1) with a roof (2) which, in its open position, can be stowed in the back of the vehicle and at least partly below a lid part (D), which lid part (D) can be opened to release a luggage loading opening (19), and when the lid part (D) is partly or completely opened in this sense, the roof (2) can be lifted some distance for easier access to the areas (20) below,
**characterised in that** this lifting movement of the roof (2) for easier access differs from the beginning of a closing movement of the roof (2) and that a drive (22) is provided for the lifting movement, said drive (22) being disposed on a main bearing (24) that is central with respect to the transverse vehicle direction.

2. The convertible vehicle (1) according to claim 1, **characterised in that** several roof portions (3; 4) folded in against each other in the open roof position remain folded in against each other during the lifting movement of the roof (2) for easier access.

3. The convertible vehicle (1) according to claim 2, **characterised in that** the roof portions (3; 4) have the same relative position to one another in the lifted position of the roof (2) for easier access as in the completely opened roof position with the lid part (D) closed.

4. The convertible vehicle (1) according to any one of claims 1 to 3, **characterised in that** the drive (22) for the lifting movement of the roof for easier access is not moved during the opening or closing movement of the roof (2).

5. The convertible vehicle (1) according to claim 4, **characterised in that** the movement of the drive (22) moves a connecting rod (23) on which a horizontal pivoting axis (8) of the roof (2) is held indirectly (connecting rods 15; 16) movable.

6. The convertible vehicle (1) with a roof (2) which, in its open position, can be stowed in the back of the vehicle and at least partly below a lid part (D), according to any one of claims 1 to 5, **characterised in that** the drive (22) for the lifting movement and the bearings (14; 17) for the opening and closing movement of the roof (2) as well as the drive (18) required for the latter movement are disposed on a main bearing (24) which is central with respect to the transverse vehicle direction.

7. The convertible vehicle (1) according to any one of claims 1 to 6, **characterised in that** the roof (2) comprises a rear roof unit (3) which can be moved back and down about a pivoting axis (8) to open, said pivoting axis (8) being movable upwards during the roof opening movement in relation to the closed roof position with respect to the vehicle body (9).

8. The convertible vehicle (1) according to claim 7, **characterised in that** displacement of the pivoting axis (8) can be effected with the help of a crank mechanism (15; 16).

9. The convertible vehicle (1) according to any one of claims 1 to 8, **characterised in that** C pillars (7) located laterally of the rear window (6) in the rear roof unit (3) can be pivoted inward with respect to the rear window (6) during the roof opening.

10. Movable roof (2) for a convertible vehicle (1) according to any one of claims 1 to 9.

## Revendications

1. Véhicule cabriolet (1), comprenant un toit (2) qui est escamotable, en position ouverte, à l'arrière du véhicule et au moins partiellement sous un élément de couvercle (D), ledit élément de couvercle (D) étant ouvrable pour exposer une ouverture de chargement (19) de bagages, et lorsque l'élément de couvercle (D) est partiellement ou complètement ouvert dans ce sens, le toit (2) peut être levé un peu pour un accès plus facile aux régions (20) en dessous de celui-ci, **caractérisé en ce que** ce mouvement de levage du toit (2) pour un accès plus facile se distingue du début d'un mouvement de fermeture du toit (2) et **en ce que** l'on prévoit un entraînement (22) pour ledit mouvement de levage, ledit entraînement (22) étant disposé sur un palier principal (24) qui est central par rapport à la direction transversale du véhicule.

2. Véhicule cabriolet (1) selon la revendication 1, **caractérisé en ce que** plusieurs sections de toit (3; 4), qui sont repliées les unes vers les autres en position ouverte du toit, restent repliées de cette manière pendant le mouvement de levage du toit (2) pour un accès plus facile.

3. Véhicule cabriolet (1) selon la revendication 2, **caractérisé en ce que** les sections de toit (3; 4) présentent la même position relative, les unes par rapport aux autres, dans la position levée du toit (2) pour un accès plus facile que dans la position complètement ouverte du toit avec l'élément de couvercle (D) fermé.

4. Véhicule cabriolet (1) selon l'une quelconque des revendications 1 à 3, **caractérisé en ce que** l'entraînement (22) pour le mouvement de levage du toit pour un accès plus facile n'est pas déplacé pendant le mouvement d'ouverture ou de fermeture du toit (2).

5. Véhicule cabriolet (1) selon la revendication 4, **caractérisé en ce qu'**un guidon (23), sur lequel un axe de pivotement horizontal (8) du toit (2) est tenu déplaçable indirectement (guidons 15 ; 16), est déplaçable par le mouvement de l'entraînement (22).

6. Véhicule cabriolet (1), comprenant un toit (2) qui est escamotable, en position ouverte, à l'arrière du véhicule et au moins partiellement sous un élément de couvercle (D), selon l'une quelconque des revendications 1 à 5, **caractérisé en ce que** l'entraînement (22) pour le mouvement de levage et les paliers (14; 17) pour le mouvement d'ouverture et de fermeture du toit (2) ainsi que l'entraînement (18) nécessaire pour ce dernier mouvement sont disposés sur un palier principal (24) qui est central par rapport à la direction transversale du véhicule.

7. Véhicule cabriolet (1) selon l'une quelconque des revendications 1 à 6, **caractérisé en ce que** le toit (2) comprend un ensemble de toit arrière (3) qui est déplaçable, pour son ouverture, vers l'arrière et vers le bas autour d'un axe de pivotement (8), ledit axe de pivotement (8) étant déplacé, pendant le mouvement d'ouverture du toit, vers le haut en relation avec la carrosserie (9) du véhicule par rapport à la position fermée du toit.

8. Véhicule cabriolet (1) selon la revendication 7, **caractérisé en ce que** l'on peut effectuer le déplacement de l'axe de pivotement (8) à l'aide d'un mécanisme à manivelle (15; 16).

9. Véhicule cabriolet (1) selon l'une quelconque des revendications 1 à 8, **caractérisé en ce que** des montants C (7), qui sont disposés latéralement à la lunette arrière (6) dans l'ensemble de toit arrière (3), peuvent pivoter vers l'intérieur par rapport à la lunette arrière (6) pendant l'ouverture du toit.

10. Toit mobile (2) pour un véhicule cabriolet (1) selon l'une quelconque des revendications 1 à 9.
